Europäisches Patentamt

European Patent Office

Office européen des brevets

(11) Publication number: **0 327 058**
**A2**

## EUROPEAN PATENT APPLICATION

(21) Application number: **89101718.8**

(22) Date of filing: **01.02.89**

(51) Int. Cl.⁴: **G06F 9/44**

(30) Priority: **02.02.88 JP 23340/88**

(43) Date of publication of application:
**09.08.89 Bulletin 89/32**

(84) Designated Contracting States:
**DE FR GB**

(71) Applicant: **NEC CORPORATION**
**33-1, Shiba 5-chome, Minato-ku**
**Tokyo 108(JP)**

(72) Inventor: **Anezaki, Akihiro**
**c/o NEC Corporation 33-1, Shiba 5-chome**
**Minato-ku**
**Tokyo(JP)**

(74) Representative: **Vossius & Partner**
**Siebertstrasse 4 P.O. Box 86 07 67**
**D-8000 München 86(DE)**

(54) **Protocol data unit encoding/decoding system.**

(57) A protocol data unit encoding/decoding system includes an AST traversing mechanism, a VTL searching mechanism and a DUB searching mechanism. The AST traversing mechanism traverses an ASN.1 syntax tree including a tree structure representing the structure of the protocol data unit. When a table-type value tree list for storing decoded values of the protocol data unit is supplied, the VTL searching mechanism searches the value tree list while traversing the ASN.1 syntax tree via the AST traversing mechanism, thereby encoding the protocol data unit. When the protocol data unit is supplied, the DUB searching mechanism searches the protocol data unit while traversing the ASN.1 syntax tree via the AST traversing mechanism, thereby decoding the protocol data unit into decoded values on the value tree list.

FIG.1

## Protocol Data Unit Encoding/Decoding System

### Background of the Invention

The present invention relates to an encoding/decoding system for a protocol data unit having a structure defined in accordance with the ISO (International Organization for Standardization) 8824 "Specification of Abstract Syntax Notation One (ASN.1)" and, more particularly, to an encoding/decoding system for a presentation protocol data unit and an application protocol data unit in the OSI (Open Systems Interconnection).

In order to exchange messages, data or the like between conventional communication systems, programs for transmitting/receiving messages directly reads or writes items to be processed from/in messages.

In the above conventional technique, entities or service elements in a presentation layer and an application layer must encode and decode, on the basis of the ISO 8825 "Specification of Basic Encoding Rules for Abstract Syntax Notation One (ASN.1)", protocal data units having structures defined in accordance with the ISO 8824. Therefore, the ISO 8824 and the ISO 8825 must be considered in a plurality of programs for handling the protocol data units.

Also, in order to encode and decode all the protocol data units in the presentation layer in accordance with the ISO 7498 "Basic Reference Model", the presentation layer must consider the structures of all the protocol data units in the application layer.

### Summary of the Invention

The present invention has been made in consideration of the above situation and has as its object to provide a protocol data unit encoding/decoding system capable of systematically encoding and decoding, in place of programs for realizing various functions on the basis of the ISO 8825, a protocol data unit having a structure defined in accordance with the ISO 8824, thereby simplifying the programs and correctly dividing the functions.

In order to achieve the above object of the present invention, there is provided a protocol data unit encoding/decoding system for encoding and decoding, on the basis of the ISO 8825, a protocol data unit having a structure defined in accordance with the ISO 8824, comprising an AST traversing means for traversing an ASN.1 syntax tree comprising a tree structure representing the structure of the protocol data unit, a VTL searching means for searching, when a table-type value tree list for storing decoded values of the protocol data unit is supplied, the value tree list while traversing the ASN.1 syntax tree via the AST traversing means, thereby encoding the protocol data unit, and a DUB searching means for searching, when the protocol data unit is supplied, the protocol data unit while traversing the ASN.1 syntax tree via the AST traversing means, thereby decoding the protocol data unit into decoded values on the value tree list.

### Brief Description of the Drawings

Fig. 1 is a block diagram showing an arrangement of an embodiment of a protocol data unit encoding/decoding system according to the present invention;

Fig.2 is a flow chart schematically showing processing performed by an AST traversing means shown in Fig. 1;

Fig. 3 is a flow chart schematically showing "ROOT PROCESSING" shown in Fig. 2;

Fig. 4 is a view showing a format of a VTL as an input to a VTL searching means and an output from a DUB searching means;

Fig. 5 is a view showing an ASN.1 notation of an AST shown in Fig. 1;

Fig. 6 is a view showing a binary tree structure of the AST based on the ASN>1 notation shown in Fig. 5;

Fig. 7A is a view showing an ASN.1 notation;

Fig. 7B is a view showing a value of the VTL as an input to the VTL searching means shown in Fig. 1;

Fig. 7C is a view showing a protocol data unit on a DUB as an output from the VTL searching means and an input to the DUB searching means shown in Fig. 1; and

Fig. 7D us a view showing a value of the VTL as an output to the DUB searching means shown in Fig. 1.

### Detailed Description of the Preferred Embodiment

An embodiment of the present invention will be described in detail below with reference to the accompanying drawings.

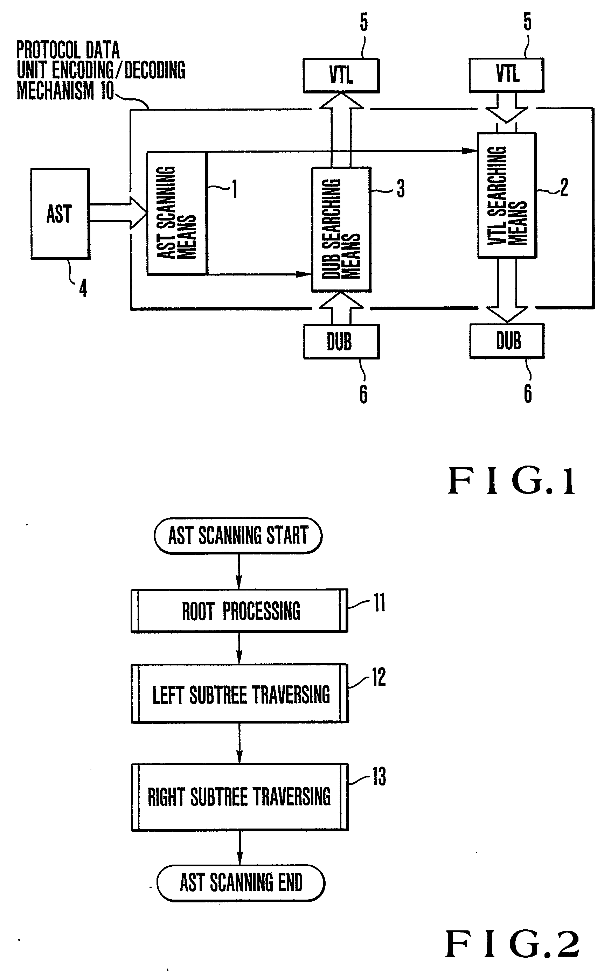

Fig. 1 is a block diagram showing an arrangement of a protocol data unit encoding/decoding mechanism 10 to which a protocol data unit encoding/decoding system according to an embodiment of the present invention is applied. The protocol data unit encoding/decoding mechanism 10 comprises an AST traversing means 1 for traversing an ASN.1 Syntax Tree (to be referred to an an AST hereinafter) 4 which defines structures of protocol data units, a VTL searching means 2 for searching a table-type Value Tree List (to be referred to as a VTL hereinafter) 5 which stores decoded values of protocol data units and encoding protocol date units on a data unit buffer (to be referred to as a DUB hereinafter) 6, and a DUB searching means 3 for searching the DUB 6 which stores protocol data units and decoding protocol data units on the VTL 5.

Referring to Fig. 2, processing performed by the AST traversing means 1 consists of "ROOT PROCESSING" in step 11, "LEFT SUBTREE TRAVERSING" in step 12 and "RIGHT SUBTREE TRAVERSING" in step 13.

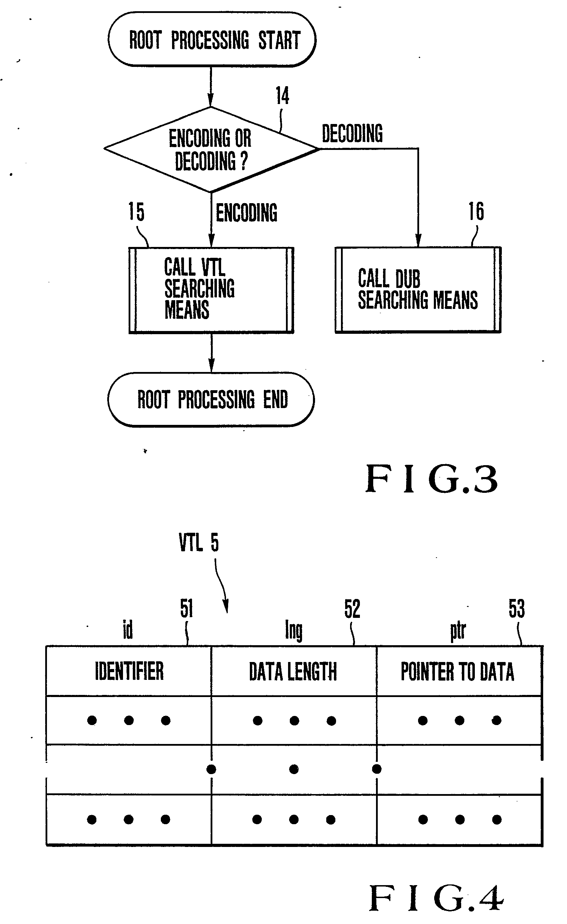

Referring to Fig. 3, detailed processing of the "ROOT PROCESSING" in step 11 consists of "Encoding/Decoding Determination" in step 14, "VTL Searching Means Calling" in step 15 and "DUB Searching Means Calling" in step 16.

Referring to Fig. 4, in the VTL 5, each cell consists of three items of an id item 51, an lng item 52 and a ptr item 53, and a plurality of items are aligned. The id item 51 stores an identifier for representing a selected element (see the ISO 8824), the lng item 52 stores a data length with respect to the selected element or an opening parenthesis and a corresponding closing parenthesis if the element is a structure, and the ptr item 53 stores a pointer to data with respect to the selected element.

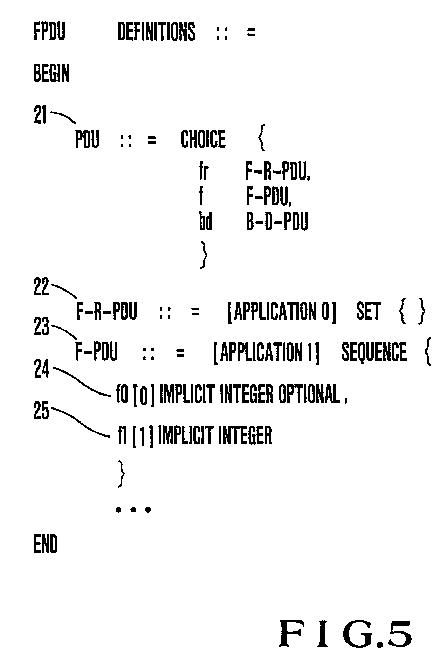

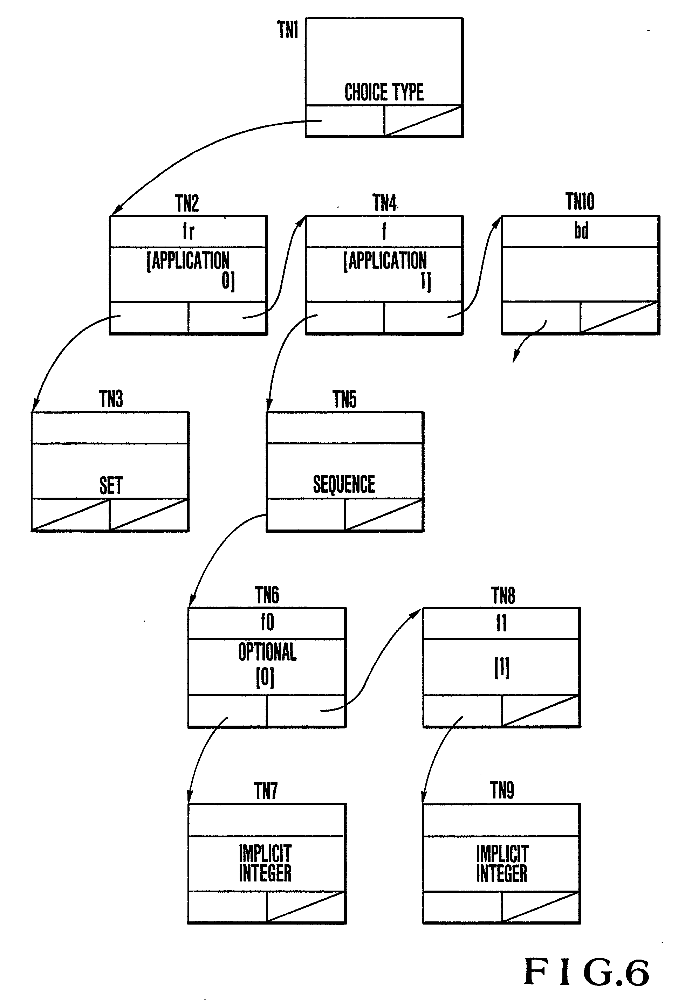

Assuming that the structure of a protocol data unit is defined in accordance with an ASN.1 notation as shown in Fig. 5, the definition of the structure is developed as the AST 4 as shown Fig. 6. In the AST 4, the structure definition of the protocol data unit according to the ASN.1 notation is decoded into nodes, and each node is linked to another in a parent-child relationship as the left subtree and to another in a brother relationship as the right subtree, thereby forming a binary tree structure. Lines 21 to 25 in the ASN.1 notation shown in Fig. 5 correspond to nodes TN1, TN2, TN4, TN6 and TN8 shown in Fig. 6, respectively.

An operation of the protocol data unit encoding/decoding system according to the embodiment having the above arrangement will be described below.

(1) Encoding

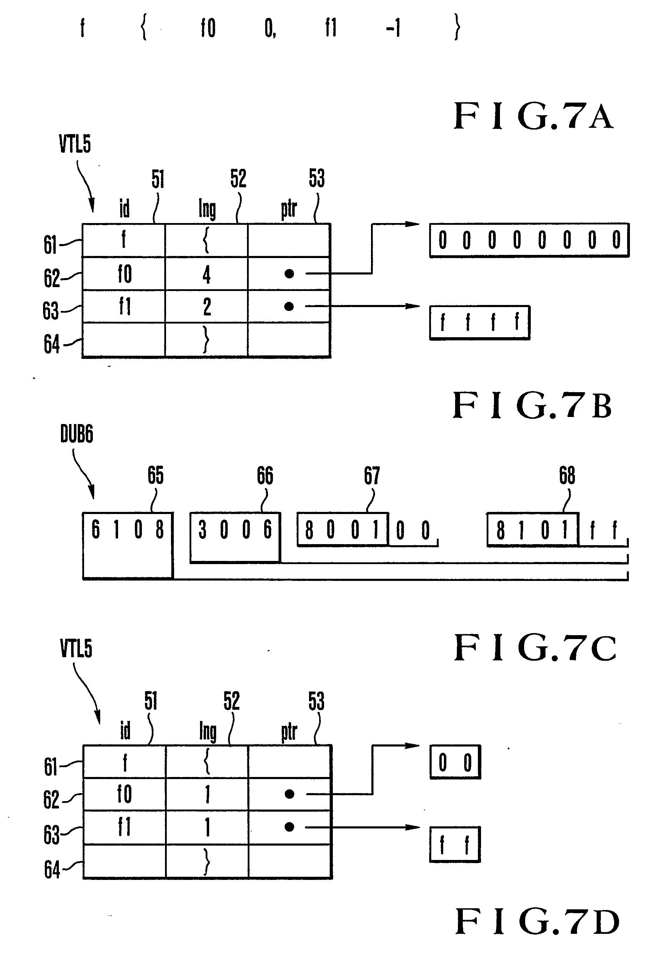

In encoding of a protocol data unit, the programs supply the AST 4 and VTL 5 to the protocol data unit encoding/decoding mechanism 10, thereby activating the mechanism. Assume that the binary tree structure as shown in Fig. 6 is supplied to the AST 4 and an ASN.1 notation as shown in Fig. 7A is stored in the VTL 5 in the manner as shown in Fig. 7B.

① In the protocol data unit encoding/decoding mechanism 10, the AST traversing means 1 traverses the AST 4 and performs the root processing to the node TN1 as a root (step 11).

In the root processing to the node TN1, whether encoding or decoding is to be performed is checked (step 14). In this case, since encoding is to be performed, the VTL searching means 2 is called (step 15).

The VTL searching means 2 searches an identifier "f" from the id item 51 of a first cell 61 in the VTL 5.

Since the node TN1 is of a CHOICE type, the AST traversing means 1 selects the node TN4 having the identifier "f" searched by the VTL searching means 2 from the nodes TN2, TN4 and TN10 which are the children of the node TN1 and are brothers.

Since the node TN4 is of an [APPLICATION 1] type, the VTL searching means 2 encodes a value '61'H (H represents hexadecimal notation. This will be the same hereinafter) of the [APPLICATION 1] type defined by the ISO 8825 on the DUB 6, obtains a length of as a content of the value from the lng item 52 in the VTL 5 and encodes '08'H on the DUB 6 (see reference numeral 65 in Fig. 7C).

② The AST traversing means 1 traverses the node TN5 as the left subtree of the node TN4 of the AST 4 (step 12) and recursively performs the root processing to the node TN5 (step 11).

Since the node TN5 is of a SEQUENCE type, the VTL searching means 2 encodes a value '30'H of the SEQUENCE type defined by the ISO 8825 on the DUB 6, obtains a length '06'H as a content of the value from the lng item 52 in the VTL 5 and encodes the length on the DUB 6 (see reference numeral 66 in Fig. 7C).

③ Subsequently, the AST traversing means 1 traverses the node TN6 as the left subtree of the node TN5 of the AST 4 (step 12) and recursively performs the "ROOT PROCESSING" to the node TN6 (step 11).

Since the node TN6 is of an OPTIONAL attribute, the VTL searching means 2 checks, in accordance with whether the id item 51 of a second cell 62 in the VTL 5 shown in Fig. 7B is "f0", whether the element is omitted. Since the id item is "f0", the VTL searching means 2 encodes a value '80'H of a [0] type defined by the ISO 8825 on the DUB 6. In this case, since the node TN7 as the left subtree of the node TN6 is of an IMPLICIT attribute, the VTL searching means 2 performs processing of an INTEGER type represented by the node TN7 to date '00000000'H represented by the ptr item 53 of the second cell 62 in the VTL 5. Since the INTEGER type uses a minimum octet capable of representing its value as data, only '00'H is required. The VTL searching means 2 encodes '01'H representing a length and data '00'H on the DUB 6 (see reference numeral 67 in Fig. 7C),

④ The AST traversing means 1 then traverses the left and right subtrees of the node TN7 of the AST 4 (steps 12 and 13). Since the node TN7 has no subtree, however, the AST traversing means 1 recurrently performs the root processing to the node TN8 as the right subtree of the node TN6 (step 11).

Since the node TN8 is of a [1] type, the VTL searching means 2 encodes a value '81'H of the[1] type defined by the ISO 8825 on the DUB 6. In this case, since the node TN9 as the left subtree of the node TN8 is of an IMPLICIT attribute, the VTL searching means 2 performs processing of an INTEGER type to data 'ffff'H represented by the ptr item 53 of a third cell 63 in the VTL 5. This data represents an integer of -1. Since an octet required for representing an integer of -1 is only 'ff'H, the VTL searching means 2 encodes '01'H representing a length on the DUB 6 and then encodes data 'ff'H thereon (see reference numeral 68 in Fig. 7C).

⑤ The AST traversing means 1 traverses the left and right subtrees of the node TN9 of the AST 4 (steps 12 and 13). Since the node TN9 has no subtree, however, the AST traversing means 1 traverses the right subtree of the node TN8. Since the node TN8 has no subtree, however, the AST traversing means 1 traverses the right subtree of the node TN5. Since the node TN5 has no subtree, however, the AST traversing means 1 determines the end of the SEQUENCE type of the node TN5.

The AST traversing means 1 then traverses the right subtree of the node TN1. Since the node TN1 has no subtree, however, the AST traversing means 1 ends the processing. As a result, a protocol data unit as shown in Fig. 7C is formed on the DUB 6.

(2) Decoding

In decoding of a protocol data unit, the programs supply the AST 4 and the DUB 6 to the protocol data unit encoding/decoding mechanism 10, thereby activating the mechanism. Assume that the binary tree structure as shown in Fig. 6 is supplied to the AST 4 and the protocol data unit as shown in Fig. 7C is supplied on the DUB 6.

① In the protocol data unit encoding/decoding mechanism 10, the AST traversing means 1 traverses the AST 4 and performs the root processing to the node TN1 as a root (step 11).

In the root processing to the node TN1, whether encoding or decoding is to be performed is determined (step 14). In this case, since decoding is to be performed, the DUB searching means 3 is called (step 16).

The DUB searching means 3 searches '61'H from the first octet of the protocol data unit on the DUB 6.

Since the node TN1 is of the CHOICE type, the AST traversing means 1 selects the node TN4 from the nodes TN2, TN4 and TN10 which are the children of the node TN1 and are brothers '61'H searched by the DUB searching means 3 represents the [APPLICATION 1].

The DUB searching means 3 decodes the identifier "f" of the node TN4 in the id item 51 of the first cell 61 in the VTL 5 and decodes '08'H representing the length of the content in the second octet of the protocol data unit on the DUB 6 in the lng item 52 of the first cell 61 of the VTL 5.

② The AST traversing means 1 then traverses the node TN5 as the left subtree of the node TN4 of the AST 4 (step 12) and recursively performs the root processing to the node TN5 (step 11).

Since the node TN5 is of the SEQUENCE type, the DUB searching means 3 checks whether the third octet of the protocol data unit on the DUB 6 is '30'H representing the SEQUENCE type. Since the third octet is '30'H, the DUB searching means 3 decodes "{"representing the start of the SEQUENCE type in the lng item 52 of the first cell 61 in the VTL 5 (see Fig. 7D). Although the fourth octet of the protocol data unit on the DUB 6 represents the length of the content of the SEQUENCE type, it is not decoded.

③ Subsequently, the AST traversing means 1 traverses the node TN6 as the left subtree of the node TN5 of the AST 4 (step 12) and recursively performs the root processing to the node TN6 (step 11).

Since the node TN6 is of the OPTIONAL attribute, the DUB searching means 3 checks in accordance with the fifth octet of the protocol data unit on the DUB 6 whether the element is omitted. Since the fifth octet of the protocol data unit is '08'H representing the [0± type, the DUB searching means 3 determines that the element is not omitted and decodes the identifier "f0" of the node TN6 in the id item 52 of the second cell 62 in the VTL 5. In this case, the node TN7 as the left subtree of the node TN6n is of the IMPLICIT attribute. Therefore, assuming that the node TN7 is of the INTEGER type, the DUB searching means 3 decodes '01'H representing the length at the sixth octet of the protocol data unit in the lng item 52 of the second cell 62 in the VTL 5 and decodes an address of '00'H representing an integer at the seventh octet of the protocol data unit in the ptr item 53 of the second cell 62 in the VTL 5.

④ The AST traversing means 1 traverses the left and right subtrees of the node TN7 of the AST 4. Since the node TN7 has no subtree, however, the AST traversing means 1 traverses the node TN8 as the right subtree of the node TN6 (step 13) and recursively performs the root processing to the node TN8 (step 11).

Since the node TN8 is of the [1] type, the DUB searching means 3 checks whether the eighth octet of the protocol data unit on the DUB 6 is '81'H representing the [1] type. Since the eighth octet is '81'H, the DUB searching means 3 decodes the identifier "f1" of the node TN8 in the id item 51 of the third cell 63 in the VTL 5. In this case, the node TN9 as the left subtree of the node TN8 is of the IMPLICIT attribute. Therefore, assuming that the node TN9 is of the INTEGER type, the DUB searching means 3 decodes '01'H representing the length at the ninth octet of the protocol data unit on the DUB 6 directly in the ℓng item 52 of the third cell 62 in the VTL 5 and decodes an address of 'ff'H representing an integer of -1 at the tenth octet of the protocol data unit on the DUB 6 in the ptr item 53 of the third cell 63 in the VTL.

⑤ The AST traversing means 1 traverses the left and right subtrees of the node TN9 of the AST 4 (steps 12 and 13). Since the node TN9 has no subtree, however, the AST traversing means 1 traverses the right subtree of the node TN8. Since the node TN8 has no subtree tree, however, the AST traversing means 1 traverses the right subtree of the node TN5. Since the node TN5 has no subtree, however, the AST traversing means 1 determines the end of the SEQUENCE type processing and decodes "}" representing the end of the SEQUENCE type in the ℓng item 52 of the fourth cell 64 in the VTL 5 (see Fig. 7D)>

The ASD traversing means 1 then traverses the right subtree of the node TN1. Since the node TN1 has no subtree, however, the AST traversing means 1 ends the processing. As a result, the VTL 5 shown in Fig. 7D having the ℓng and ptr items 52 and 53 different from those of the VTL 5 shown in Fig. 7B is formed.

As has been described above, according to the present invention, a protocol data unit having a structure defined in accordance with the ISO 8824 can be systematically encoded and decoded in place of a plurality of programs on the basis of the ISO 8825. As a result, labors required for programming complicated encoding an decoding processing in a plurality of programs for handling protocol data units can be omitted, thereby simplifying the programs and correctly dividing functions.

Especially in programs for realizing various functions of the application layer, each protocol can be processed by only referring to decoded values on a VTL corresponding to an ASN.1 value notation.

## Claims

A protocol data unit encoding/decoding system for encoding and decoding, on the basis of the ISO 8825, a protocol data unit having a structure defined in accordance with the IS + O 8824, comprising :

AST traversing means for traversing an ASN.1 syntax tree comprising a tree structure representing the structure of the protocol data unit;

VTL searching means for searching, when a table-type value tree list for storing decoded values of the protocol data unit is supplied, the value tree list while traversing the ASN.1 syntax tree via said AST traversing means, thereby encoding the protocol data unit; and

DUB searching means for searching, when the protocol data unit is supplied, the protocol data unit while traversing the ASN.1 syntax tree via said AST traversing means, thereby decoding the protocol data unit into decoded values on the value tree list.

EP 0 327 058 A2

PROTOCOL DATA
UNIT ENCODING/DECODING
MECHANISM 10

FIG.1

AST SCANNING START

ROOT PROCESSING — 11

LEFT SUBTREE TRAVERSING — 12

RIGHT SUBTREE TRAVERSING — 13

AST SCANNING END

FIG.2

ROOT PROCESSING START

ENCODING OR DECODING ? — 14

DECODING

ENCODING

15 — CALL VTL SEARCHING MEANS

16 — CALL DUB SEARCHING MEANS

ROOT PROCESSING END

# F I G.3

VTL 5

id — 51

lng — 52

ptr — 53

| IDENTIFIER | DATA LENGTH | POINTER TO DATA |
|---|---|---|
| ● ● ● | ● ● ● | ● ● ● |
| ● | ● | ● |
| ● ● ● | ● ● ● | ● ● ● |

# F I G.4

```
FPDU      DEFINITIONS  ::  =

BEGIN

21
    PDU  ::  =   CHOICE   {
                    fr    F-R-PDU,
                    f     F-PDU,
                    bd    B-D-PDU
                    }
22
    F-R-PDU  ::  =  [APPLICATION 0]  SET  { }
23
    F-PDU  ::  =  [APPLICATION 1]  SEQUENCE  {
24
    f0 [0] IMPLICIT INTEGER OPTIONAL ,
25
    f1 [1] IMPLICIT INTEGER
        }
        • • •
END
```

# F I G.5

TN1

CHOICE TYPE

TN2

f r

[APPLICATION
0]

TN4.

f

[APPLICATION
1]

TN10

b d

TN3

SET

TN5

SEQUENCE

TN6

f0

OPTIONAL
[0]

TN8

f1

[1]

TN7

IMPLICIT
INTEGER

TN9

IMPLICIT
INTEGER

F I G.6

EP 0 327 058 A2

f      {      f0      0,      f1      -1      }

**F I G.7A**

VTL5

| | 51 | 52 | 53 |
|---|---|---|---|
| id | | lng | ptr |
| f | | { | |
| f0 | | 4 | ● |
| f1 | | 2 | ● |
| | | } | |

61, 62, 63, 64

0 0 0 0 0 0 0 0

f f f f

**F I G.7B**

DUB6

| 65 | 66 | 67 | 68 |
|---|---|---|---|
| 6 1 0 8 | 3 0 0 6 | 8 0 0 1  0 0 | 8 1 0 1  f f |

**F I G.7C**

VTL5

| | 51 | 52 | 53 |
|---|---|---|---|
| id | | lng | ptr |
| f | | { | |
| f0 | | 1 | ● |
| f1 | | 1 | ● |
| | | } | |

61, 62, 63, 64

0 0

f f

**F I G.7D**